# EUROPÄISCHE PATENTSCHRIFT

(11) **EP 3 095 543 B1**
(45) Veröffentlichungstag und Bekanntmachung des Hinweises auf die Patenterteilung: **27.02.2019**
(21) Anmeldenummer: 16175242.3
(22) Anmeldetag: 11.07.2013
(51) Int. Cl.: B23D 59/00, B27B 9/02

(54) **BEARBEITUNGSMASCHINE**
MACHINING UNIT
MACHINE D'USINAGE

(30) Priorität: 30.07.2012 DE 102012213383
(43) Veröffentlichungstag der Anmeldung: 23.11.2016
(62) Teilanmeldung aus: 13176117.3
(73) Patentinhaber: Mafell AG, 78727 Oberndorf a.N. (DE)
(72) Erfinder: Lauckner, Helmut, 72172 Sulz a. N. (DE); Schellhammer, Karl, 72172 Sulz-Fischingen (DE); Zimmermann, Horst, 72160 Horb-Betra (DE)
(74) Vertreter: Manitz Finsterwald Patentanwälte PartmbB

(56) Entgegenhaltungen:
- EP-A1- 2 412 499
- EP-A2- 0 925 893

## Beschreibung

Die vorliegende Erfindung betrifft eine Bearbeitungsmaschine gemäß dem Oberbegriff des Anspruchs 1. Eine solche Bearbeitungsmaschine ist aus EP 925 893 A bekannt.

Beim Arbeiten mit Handkreissägen wie Tauchsägen oder Pendelhaubensägen ist es häufig erforderlich, die Bearbeitungstiefe zu verstellen. Zu diesem Zweck muss ein Benutzer die Feststelleinrichtung lösen und anschließend die Bearbeitungstiefe mittels der Handhabe auf den gewünschten Wert einstellen. Sobald das Bearbeitungswerkzeug selbst oder ein Anschlag für das Bearbeitungswerkzeug die der gewünschten Bearbeitungstiefe entsprechende Stellung erreicht hat, ist die Feststelleinrichtung wieder zu arretieren, um ein unerwünschtes Verstellen der Bearbeitungstiefe während des Bearbeitungsvorgangs zu verhindern. Diese Art der Bedienung ist für einen Benutzer lästig - insbesondere dann, wenn häufige Änderungen der Bearbeitungstiefe erforderlich sind. Außerdem besteht die Gefahr, dass das Arretieren der Feststelleinrichtung nach dem Einstellen der Bearbeitungstiefe vom Benutzer vergessen wird.
Es ist daher eine Aufgabe der Erfindung, eine einfachere und zuverlässigere Bedienung von Bearbeitungsmaschinen der vorstehend genannten Art zu ermöglichen.

Die Lösung der Aufgabe erfolgt durch eine Bearbeitungsmaschine mit den Merkmalen des Anspruchs 1.

Weiterbildungen der Erfindung sind in dem abhängigen Anspruch, der Beschreibung sowie den beigefügten Zeichnungen angegeben.
Gemäß einer Ausführungsform der Erfindung ist das Betätigungselement beweglich, insbesondere verschwenkbar, an der Handhabe gelagert, wobei vorzugsweise ein Hinweiszeichen an dem Betätigungselement vorgesehen ist, welches die Bewegungsrichtung des Betätigungselements für einen Benutzer erkennbar macht. Das beweglich gelagerte Betätigungselement kann von einem Benutzer, welcher zum Verstellen der Bearbeitungstiefe die Handhabe ergreift, leicht bewegt werden. Das Hinweiszeichen, bei dem es sich beispielsweise um einen in Bewegungsrichtung des Betätigungselements weisenden Pfeil handelt, erleichtert dabei auch einem mit der Maschine nicht vertrauten Benutzer die korrekte Bedienung der Feststelleinrichtung.

Das Betätigungselement kann über eine Hebelanordnung mit der Feststelleinrichtung zusammenwirken, wobei insbesondere die Hebelanordnung einen Schwenkhebel umfasst, der um eine die Handhabe durchsetzende Schwenkachse drehbar ist, wobei zumindest teilweise der eine Hebelarm das Betätigungselement und der andere Hebelarm die Feststelleinrichtung umfasst. Eine solche Hebelanordnung ermöglicht eine günstige Kraftübertragung von dem Betätigungselement bis zu einem entsprechenden Wirkelement der Feststelleinrichtung. Aufgrund der Hebelanordnung, welche je nach Konstruktion der Bearbeitungsmaschine eine beliebige Anzahl von zusammenwirkenden Hebeln umfassen kann, kann also die Bedienung der Feststelleinrichtung an der Handhabe erfolgen und ist nicht auf den Ort des Wirkelements beschränkt. Ein an der Handhabe schwenkbar gelagerter Schwenkhebel, an dessen einem Hebelende das Betätigungselement angebracht ist, ermöglicht eine besonders einfache Konstruktion.

Gemäß einer bevorzugten Ausführungsform der Erfindung weist die Handhabe einen Griffabschnitt auf, an dessen Stirnseite das als Drucktaste, Druckknopf oder Druckhebel ausgebildete Betätigungselement vorgesehen ist. Dies ermöglicht eine besonders einfache Bedienung der Bearbeitungsmaschine, da ein Benutzer z.B. den Griffabschnitt der Handhabe zum Verstellen der Bearbeitungstiefe umfassen und dabei gleichzeitig mit dem Daumen den Druckknopf an der Stirnseite des Griffabschnitts betätigen kann.

Vorzugsweise ist das Betätigungselement mittels einer Federeinrichtung in Richtung einer eine eingestellte Bearbeitungstiefe fixierenden Arretierstellung vorgespannt. Auf diese Weise wird die Bedienung der Maschine weiter erleichtert, da das Feststellen der Bearbeitungstiefe gewissermaßen automatisch - nämlich durch Loslassen des Betätigungselements - erfolgt.

Zudem wird so vermieden, dass das erneute Arretieren nach einem Verstellen der Bearbeitungstiefe versehentlich vergessen wird.
Weiterhin kann an der Handhabe ein Zeigerelement vorgesehen sein, welches mit einer am Grundkörper oder an der Arbeitseinheit vorgesehenen Skala zusammenwirkt, um die jeweils eingestellte Bearbeitungstiefe anzuzeigen. Ein Benutzer kann somit während des Verstellens der Bearbeitungstiefe den aktuellen Wert ablesen. Hierbei ist es von besonderem Vorteil, dass das Mittel zum Verstellen der Bearbeitungstiefe, das Betätigungselement der Feststelleinrichtung und die Anzeige der aktuell eingestellten Bearbeitungstiefe an ein und derselben Stelle konzentriert sind.
Gemäß einer weiteren Ausführungsform der Erfindung ist zum Einstellen der Bearbeitungstiefe die Arbeitseinheit oder ein Anschlag für die Arbeitseinheit relativ zum Grundkörper bewegbar, wobei insbesondere die Feststelleinrichtung wenigstens eine Vorrichtung zum Verspannen der Arbeitseinheit oder des Anschlags mit dem Grundkörper umfasst. Beispielsweise kann bei einer Pendelhaubensäge die den Motor und das Sägeblatt tragende Arbeitseinheit selbst verstellt werden. Hingegen kann bei einer Tauchsäge zum Verstellen der Bearbeitungstiefe lediglich die Position eines wie auch immer gearteten Anschlags für die Arbeitseinheit verstellt werden. In beiden Fällen ist die Bearbeitungstiefe mittels der Feststelleinrichtung leicht fixierbar. Durch ein Verspannen der Arbeitseinheit oder des Anschlags mit dem Grundkörper, beispielsweise durch Druck eines Klemmkörpers auf eine entsprechende Gleitführung, ist ein sicheres Arretieren der eingestellten Bearbeitungstiefe gewährleistet.

Dokument EP 925 893 A offenbart eine Bearbeitungsmaschine, insbesondere eine elektrische Handkreissäge, mit einem, insbesondere eine Grundplatte umfassenden, Grundkörper, und einer Arbeitseinheit, die ein angetriebenes Bearbeitungswerkzeug, insbesondere ein Sägeblatt, umfasst, wobei zum Einstellen der Bearbeitungstiefe die Arbeitseinheit oder ein Anschlag für die Arbeitseinheit relativ zum Grundkörper bewegbar ist und zum wahlweisen Feststellen einer eingestellten Bearbeitungstiefe des Bearbeitungswerkzeugs relativ zum Grundkörper eine Spannvorrichtung zum Verspannen der Arbeitseinheit oder des Anschlags mit dem Grundkörper vorgesehen ist, wobei die Spannvorrichtung einen beweglichen, insbesondere verschwenkbaren, Klemmkörper umfasst, der in einer Arretierstellung der Spannvorrichtung auf eine Gegenfläche drückt.

Während des Betriebs von Handkreissägen stützt sich der Benutzer häufig auf die Maschine auf bzw. übt einen bereits bei normaler Handhabung der Maschine gegebenen Druck auf die Arbeitseinheit aus, wodurch die Spannvorrichtung mit einer relativ hohen Kraft beaufschlagt wird. Dies geschieht auch dann, wenn von der Art des Umgangs des Bedieners mit der Maschine unabhängige Bearbeitungskräfte einwirken, insbesondere dann, wenn die Schnittkräfte die Maschine nach unten in Richtung des Werkstücks ziehen. Hierdurch kann die Qualität des geschnittenen Werkstücks beeinträchtigt und der Bediener gefährdet werden. Um dennoch eine sichere Arretierung zu gewährleisten, muss die Spannvorrichtung entsprechend leistungsfähig ausgelegt werde, was mit einem hohen Aufwand verbunden ist.

Erfindungsgemäß ist daher vorgesehen, dass der Klemmkörper gemeinsam mit der Gegenfläche zumindest in einer Verstellrichtung ein selbsthemmendes Gesperre bildet. Bei einer Krafteinwirkung auf die Arbeitseinheit in der Verstellrichtung - z.B. aufgrund von einwirkenden Bearbeitungskräften (wie vorstehend erwähnt) oder in Folge eines Aufstützens auf die Arbeitseinheit - sperrt das Gesperre und verhindert unabhängig von der übrigen Gestaltung der Spannvorrichtung ein unbeabsichtigtes Verstellen der Bearbeitungstiefe. Mit anderen Worten ist es aufgrund des Gesperres ausgeschlossen, dass die Klemmkraft der Spannvorrichtung durch eine vom Benutzer von außen in der Verstellrichtung ausgeübte Kraft überwunden wird.
Vorzugsweise weist eine Funktionsfläche des Klemmkörpers in der Arretierstellung einen spitzen Winkel zu der Gegenfläche auf. Dadurch ergibt sich eine Keilwirkung, d.h. bei einer Belastung der Spannvorrichtung entgegen der durch den spitzen Winkel definierten Pfeilrichtung verkeilt sich der Klemmkörper in der Gegenfläche und sorgt für eine selbsthemmende Arretierung. In der entgegengesetzten Richtung kann der Klemmkörper federvorgespannt sein.

Die hier offenbarten Aspekte sind grundsätzlich an Bearbeitungsmaschinen jedweder Art einsetzbar, insbesondere an unterschiedlichen Typen von elektrischen Handkreissägen, wobei diese Aspekte in besonders vorteilhafter Weise für als Pendelhaubensägen ausgebildete Handkreissägen geeignet sind.
Nachfolgend wird die Erfindung beispielhaft unter Bezugnahme auf die Zeichnungen beschrieben.
- Fig. 1: zeigt eine vereinfachte Seitenansicht einer Handkreissäge gemäß einer ersten Ausführungsform der Erfindung.
- Fig. 1a: zeigt eine Feststelleinrichtung der Handkreissäge gemäß Fig. 1 in einem gelösten Zustand.
- Fig. 1b: zeigt die Feststelleinrichtung gemäß Fig. 1a in einem festgestellten Zustand.
- Fig. 2: ist eine teilweise schematische Draufsicht auf die Handkreissäge gemäß Fig. 1.
- Fig. 3: ist eine Vorderansicht einer Handkreissäge gemäß einer zweiten Ausführungsform der Erfindung in einer ersten Schwenkstellung.
- Fig. 4: zeigt die Handkreissäge gemäß Fig. 3 in einer zweiten Schwenkstellung.
- Fig. 5: ist eine Draufsicht auf die Handkreissäge gemäß Fig. 3.
- Fig. 6: ist eine Vorderansicht einer Handkreissäge gemäß einer dritten Ausführungsform der Erfindung in einer ersten Schwenkstellung.
- Fig. 7: zeigt die Handkreissäge gemäß Fig. 6 in einer zweiten Schwenkstellung.
- Fig. 8: ist eine Draufsicht auf die Handkreissäge gemäß Fig. 6.
- Fig. 9: ist eine vereinfachte Seitenansicht einer Handkreissäge gemäß einer vierten Ausführungsform der Erfindung, wobei eine erste Schnitttiefe eingestellt ist.
- Fig. 10: zeigt die Handkreissäge gemäß Fig. 9, wobei eine zweite Schnitttiefe eingestellt ist.
- Fig. 11: ist eine vergrößerte Ansicht einer Leitplatte der Handkreissäge gemäß Fig. 9.

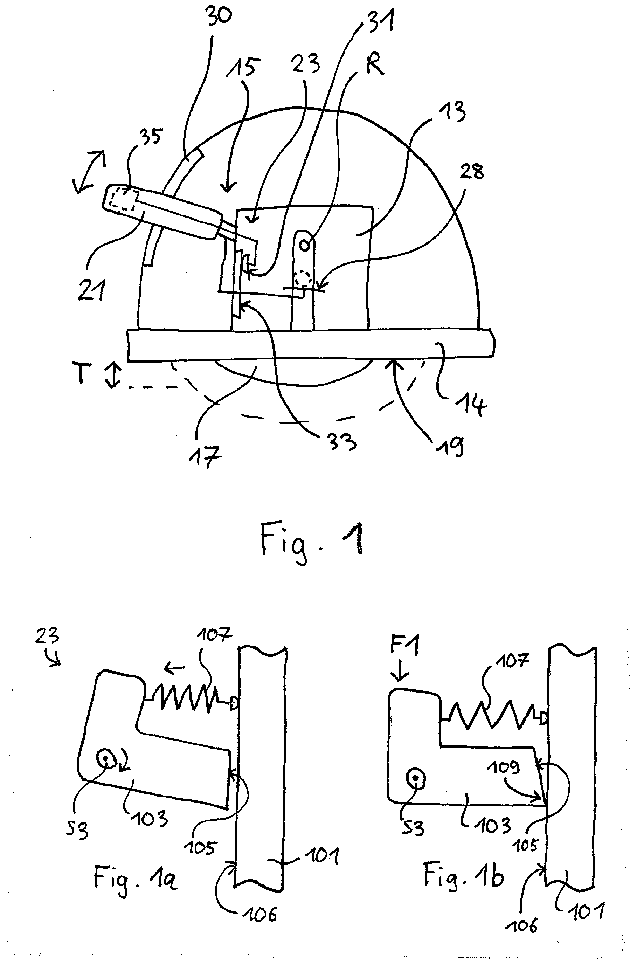

Gemäß Fig. 1 umfasst eine als Pendelhaubensäge ausgebildete elektrische Handkreissäge einen Grundkörper 13, an dessen Unterseite eine Grundplatte 14 zum Abstützen des Geräts auf einer Werkstückoberfläche oder einer Führungsschiene vorgesehen ist. Eine Arbeitseinheit 15 der Handkreissäge trägt ein um eine Rotationsachse R drehend angetriebenes Sägeblatt 17. Die Bearbeitungstiefe T der Pendelhaubensäge ist durch den maximalen Abstand des Sägeblattumfangs von der Unterseite 19 der Grundplatte 14 gegeben.

Um diese Bearbeitungstiefe T einstellen zu können, ist ein lediglich schematisch dargestelltes Lager 28 des Sägeblatts 17 mit einer Handhabe 21 gekoppelt. Mittels der Handhabe 21 kann ein Benutzer das Sägeblatt 17 in der Höhe verstellen und somit die Schnitttiefe beim Sägen, d.h. die Bearbeitungstiefe T, festlegen. Bei der dargestellten Ausführungsform erfolgt die Einstellung der Bearbeitungstiefe T durch Verschwenken der Handhabe 21, wie in Fig. 1 durch den Doppelpfeil dargestellt ist. Die Verstellung könnte grundsätzlich auch durch lineares Verschieben einer entsprechend geführten Handhabe bewerkstelligt werden.

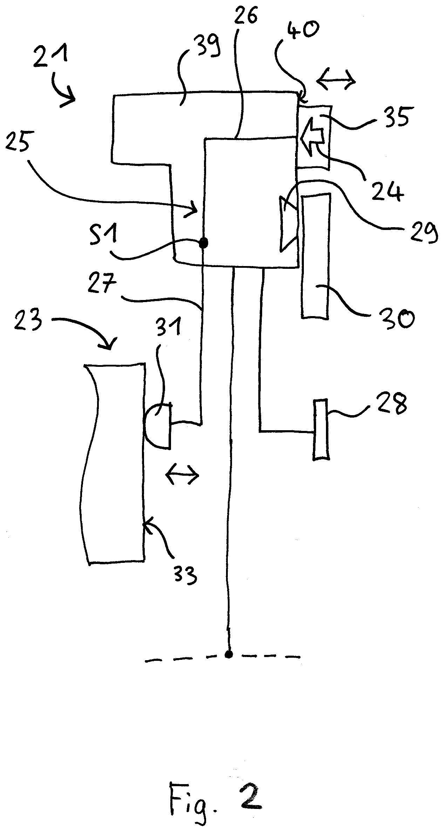

Mittels einer hier wiederum lediglich schematisch dargestellten Feststelleinrichtung 23 kann die Handhabe 21 in einer bestimmten Schwenkstellung und somit das Lager 28 des Sägeblatts 17 in einer bestimmten Höhe fixiert werden. Die Feststelleinrichtung 23 umfasst zu diesem Zweck einen beweglichen Klemmkörper 31, der wahlweise gegen eine Klemmfläche 33 gedrückt werden kann. Die Bewegung des Klemmkörpers 31 erfolgt durch Betätigen eines Betätigungsknopfs 35, welcher an der Handhabe 21 vorgesehen ist, wie nachfolgend unter zusätzlicher Bezugnahme auf Fig. 2 näher erläutert wird.

Wie dargestellt umfasst die Handhabe 21 einen länglichen Griffabschnitt 39, an dessen im Bild rechter Stirnseite 40 das als Druckknopf ausgebildete Betätigungselement 35 vorgesehen ist. Ein Schwenkhebel 25 ist um eine die Handhabe 21 durchsetzende Schwenkachse S1 in einem Gehäuse der Handhabe 21 gelagert und weist einen ersten, im Bild oberen Hebelarm 26 und einen zweiten, im Bild unteren Hebelarm 27 auf. Der Druckknopf 35 ist an dem freien Ende des oberen Hebelarms 26 befestigt, wohingegen der Klemmkörper 31 der Feststelleinrichtung 23 an dem freien Ende des unteren Hebelarms 27 befestigt ist. Es sei darauf hingewiesen, dass die Ausführungsform mit einem einzelnen Schwenkhebel 25 lediglich beispielhaft ist und die Kraftübertragung von dem Druckknopf 35 auf den Klemmkörper 31 je nach Anwendung eine Anordnung aus mehreren Schwenkhebeln und gegebenenfalls zusätzlichen Gleitführungen aufweisen kann.

Ein Hinweispfeil 24, welcher die zum Lösen der Feststelleinrichtung 23 notwendige Bewegung für einen Benutzer von außen kenntlich macht, ist an einer Mantelfläche des Druckknopfs 35 vorgesehen. Weiterhin befindet sich neben dem Druckknopf 35 eine Tiefenmarkierung 29, welche bei einem Verstellen der Bearbeitungstiefe T an einer fest mit dem Grundkörper 13 verbundenen Skala 30 entlangwandert und so die aktuelle Bearbeitungstiefe T anzeigt. Eine nicht dargestellte Federeinrichtung sorgt dafür, dass der Druckknopf 35 in Richtung einer den Klemmkörper 31 in Klemmstellung haltenden Arretierstellung, also im Bild nach rechts, vorgespannt ist.

Ein bevorzugtes Ausführungsbeispiel für die in Fig. 1 und 2 lediglich schematisch dargestellte Feststelleinrichtung 23 ist in Fig. 1a und 1b dargestellt. Eine an dem Grundkörper 13 fest verankerte Säule 101 bildet einen Teil einer Gleitführung für das Sägeblatt 17. Um diese Gleitführung zu blockieren und so das Sägeblatt 17 gegenüber dem Grundkörper 13 festzulegen, ist ein Klemmkörper 103 vorgesehen, welcher wie bei der Ausführungsform gemäß Fig. 2 mittels des Druckknopfs 35 zwischen der in Fig. 1a dargestellten Lösestellung und der in Fig. 1b dargestellten Arretierstellung verstellbar ist. Der Klemmkörper 103 ist im Wesentlichen L-förmig ausgebildet und um eine Schwenkachse S3 verschwenkbar gelagert. Eine Funktionsfläche 105 des Klemmkörpers 103 ist im Wesentlichen parallel zu der Oberfläche 106 der Säule 101 und beabstandet zu dieser angeordnet, wenn der Klemmkörper 103 wie in Fig. 1a in die Lösestellung verschwenkt ist. Wenn durch den Druckknopf 35 (Fig. 2) keine Kraft auf den Klemmkörper 103 ausgeübt wird, wird dieser durch eine Feder 107 in die in Fig. 1b dargestellte Arretierstellung gedrückt. In dieser Stellung drückt der untere Abschnitt 109 der Funktionsfläche 105 gegen die Oberfläche 106 der Säule 101 und bewirkt ein Verspannen des Sägeblatts 17 gegenüber dem Grundkörper 13. Die Funktionsfläche 105 weist in der Arretierstellung einen spitzen Winkel zu der Oberfläche 106 der Säule 101 auf, sodass sich der Klemmkörper 103 bei einer vom Benutzer auf die Arbeitseinheit 15 ausgeübte Kraft F1 immer stärker verkeilt. Somit ist für eine selbsthemmende Arretierung der Feststelleinrichtung 23 gesorgt.

Grundsätzlich könnte anstelle des Lagers 28 bzw. der gesamten Arbeitseinheit 15 einschließlich des Sägeblatts 17 auch lediglich ein Anschlag für das Sägeblatt 17 mittels der Handhabe 21 höhenverstellbar sein. Eine derartige Ausgestaltung käme beispielsweise für eine Tauchsäge in Betracht.

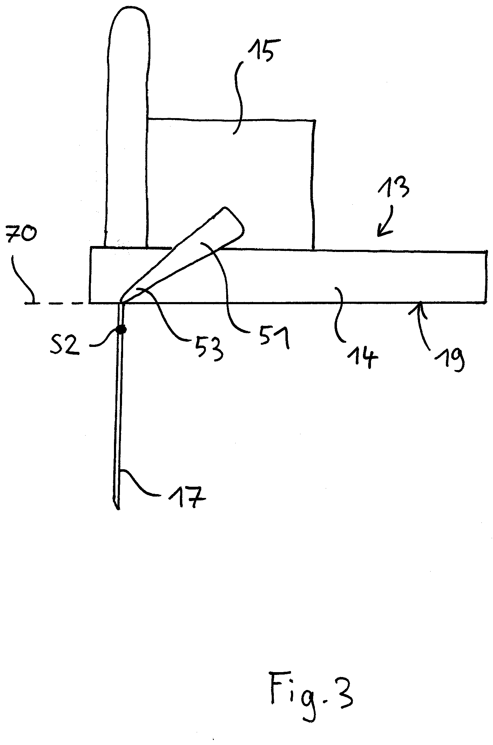

Die in den Fig. 3 bis 5 dargestellte zweite Ausführungsform der Erfindung bezieht sich auf eine Handkreissäge, welche wie die Handkreissäge gemäß Fig. 1 und 2 einen Grundkörper 13 mit einer Grundplatte 14 zum Abstützen der Handkreissäge auf einer Werkstückoberfläche oder einer Führungsschiene sowie eine Arbeitseinheit 15 umfasst. Die Arbeitseinheit 15 ist hier einschließlich des durch sie getragenen Sägeblatts 17 zum Durchführen von Schrägschnitten um eine parallel zur Sägeblattebene verlaufende, hier unterhalb der Grundplatte 14 gelegene und somit virtuelle Schwenkachse S2 gegenüber der Grundplatte 14 verschwenkbar. Wird die Handkreissäge mit ihrer Grundplatte 14 auf einer Führungsschiene eingesetzt, liegt die Schwenkachse S2 zumindest näherungsweise in der Ebene der Unterseite der Führungsschiene, die auf dem Werkstück aufliegt und somit dann eine Arbeitsebene 70' bildet.

Ein an der Arbeitseinheit 15 angeformter oder als ein einstückiger Abschnitt der Arbeitseinheit ausgebildeter Anrisszeiger 51 zeigt für jeden Schwenkwinkel W des Sägeblatts 17 zumindest näherungsweise die Lage einer gedachten Schnittlinie zwischen dem Sägeblatt 17 und einer Arbeitsebene 70 bzw. 70', in welcher während des Sägebetriebs die Werkstückoberfläche liegt, bezüglich der Grundplatte 14 und/oder der Führungsschiene für einen Benutzer von außen sichtbar an.

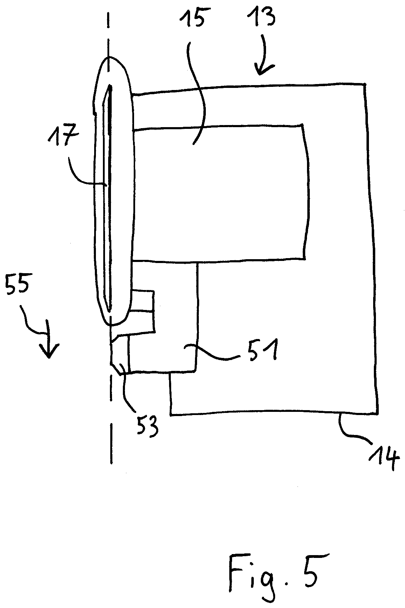

Im dargestellten Ausführungsbeispiel bildet die Unterseite 19 der Grundplatte 14 die Arbeitsebene 70. Wie insbesondere aus Fig. 5 hervorgeht, ist der Anrisszeiger 51 flächig ausgebildet, wobei sich die Ebene seiner flächigen Erstreckung im Wesentlichen parallel zu der Sägerichtung 55 (Fig. 5) und leicht schräg zu der Arbeitsebene 70 erstreckt. In Richtung der Schwenkachse S2 gesehen ist der Anrisszeiger 51 verjüngt und läuft spitz auf die Schnittlinie zu. Der vordere Teil des Anrisszeigers 51 bildet daher einen Anrissmarkierungsabschnitt 53, welcher in der in Fig. 3 dargestellten Grundstellung der Handkreissäge mit der Schnittlinie zur Deckung kommt.

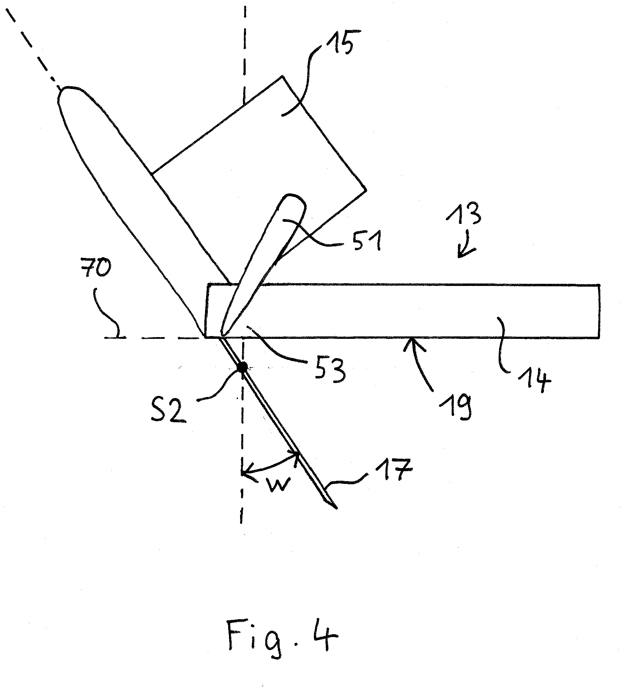

Dadurch, dass der Anrisszeiger 51 ein Bestandteil der Arbeitseinheit 15 ist, ergibt sich auf denkbar einfache Weise, dass der Anrissmarkierungsabschnitt 53 einer durch das Verschwenken der Arbeitseinheit 15 und somit des Sägeblatts 17 um die Schwenkachse S2 hervorgerufenen Verschiebung der Schnittlinie in der Arbeitsebene 70 folgt. Mit anderen Worten schwenkt bei einem Verstellen des Sägeblatts 17 von der in Fig. 3 gezeigten Grundstellung in die in Fig. 4 gezeigte Schrägstellung der Anrisszeiger 51 mit der Arbeitseinheit 15 mit, wobei der Anrissmarkierungsabschnitt 53 zumindest näherungsweise auf der Schnittlinie verbleibt.

Die Kopplung zwischen dem Anrisszeiger 51 und der Arbeitseinheit 15 kann auch anders als durch eine einstückige Ausbildung und dabei in vielfältiger Weise erfolgen, d.h. es kann beispielsweise durch Hebelanordnungen und/oder Schwenk- sowie Gleitführungen dafür gesorgt sein, dass der Anrisszeiger 51 um eine andere Schwenkachse oder um einen anderen Schwenkwinkel schwenkt wie das Sägeblatt 17.

In Abhängigkeit von den geometrischen Gegebenheiten kann es sein, dass der Anrissmarkierungsabschnitt 53 des Anrisszeigers 51 während des Verschwenkens eine Kreisbahn beschreibt. Durch geeignete Anordnung und Dimensionierung der einzelnen Bauteile kann jedoch stets erreicht werden, dass eine derartige Verschiebung des Anrissmarkierungsabschnitts 53 auf ein für einen Benutzer kaum merkliches Ausmaß beschränkt bleibt.

Da bei dem in den Fig. 3-5 dargestellten Ausführungsbeispiel die (virtuelle) Schwenkachse S2 unterhalb der Grundplatte 14 liegt, bewegt sich bei einem Schrägstellen der Arbeitseinheit 15 das Sägeblatt 17 in der Arbeitsebene 70 nach außen, also zum Rand der Grundplatte 14 hin. Das erfindungsgemäße Verschwenken des Anrisszeigers 51 funktioniert jedoch in der gleichen Weise auch bei einer Lage der Schwenkachse S2 oberhalb der Grundplatte 14, also bei einer Bewegung des Sägeblatts 17 in der Arbeitsebene 70 in Richtung des Zentrums der Grundplatte 14 im Falle eines Schrägstellens der Arbeitseinheit 15.

Für einen Benutzer ist die Bedienung der Handkreissäge dadurch vereinfacht, dass kein Verstellen des Anrisszeigers 51 nach einem Schrägstellen des Sägeblatts 17 erforderlich ist.

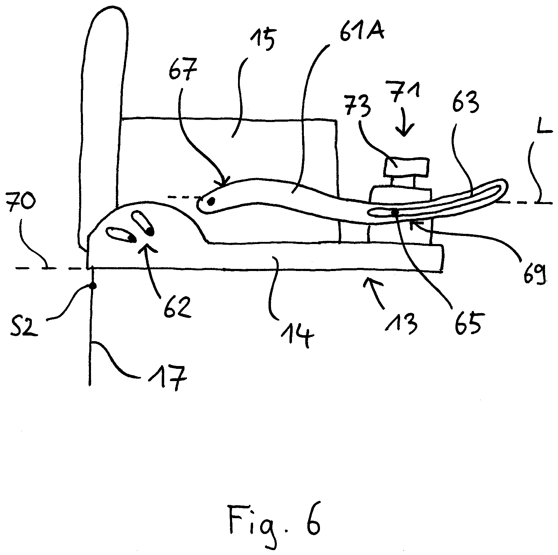

Die in den Fig. 6-8 dargestellte Handkreissäge ist ähnlich aufgebaut wie die in den Fig. 3 bis 5 dargestellte Handkreissäge. Insbesondere ist die Arbeitseinheit 15 einschließlich des rotierend angetriebenen Sägeblatts 17 relativ zu der Grundplatte 14 des Grundkörpers 13 verschwenkbar, um so das Durchführen von Schrägschnitten zu ermöglichen. Die Arbeitseinheit 15 ist hierzu bei 62 an dem im Bild linken Randbereich der Grundplatte 14 verschwenkbar gelagert. Eine derartige Schwenklagerung kann auch bei der in den Fig. 3-5 dargestellten Handkreissäge vorgesehen sein.

Weiterhin sind zwei längliche, d.h. eine jeweilige Längsachse L aufweisende, und parallel zueinander angeordnete Fixierleisten 61A, 61B vorgesehen, um die Arbeitseinheit 15 in einer bestimmten Schwenkstellung gegenüber der Grundplatte 14 abzustützen. Zu diesem Zweck sind die Fixierleisten 61A, 61B jeweils bei 67 an einem Ende drehbar an der Arbeitseinheit 15 gelagert und bei 69 an dem entgegengesetzten Ende mit einer als Langloch ausgebildeten Führungskulisse 63 versehen. Kulissensteine 65 des Grundkörpers 13 sind in den jeweiligen Führungskulissen 63 der Fixierleisten 61A, 61B geführt.

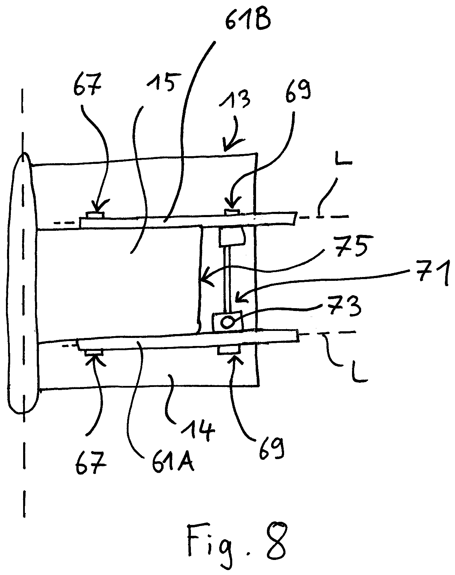

Zum wahlweisen Feststellen der Arbeitseinheit 15 relativ zum Grundkörper 13 in einer bestimmten Schwenkstellung ist eine gemeinsame Spannvorrichtung 71 für beide Fixierleisten 61A, 61B vorgesehen, mit welcher die Kulissensteine 65 in den zugehörigen Führungskulissen 63 verklemmbar sind. Die Spannvorrichtung 71 kann über eine Betätigungseinrichtung 73 betätigt werden. Das heißt ein Betätigen nur einer Betätigungseinrichtung 73 ermöglicht ein gleichzeitiges Verspannen beider Fixierleisten 61A, 61B. Dies ist in Fig. 8 durch eine schematisch dargestellte mechanische Verbindung zwischen den beiden den Fixierleisten 61A, 61B zugeordneten Teilen der Spanneinrichtung 71 wiedergegeben.

Wie dargestellt sind die Führungskulissen 63 jeweils bogenförmig und definieren daher eine gekrümmte Führungsbahn, wobei die Wölbung dieser Führungsbahn in Richtung der Arbeitsebene 70 weist. Wie insbesondere aus Fig. 8 hervorgeht, sind die Fixierleisten 61A, 61B beidseits eines Motorgehäuses 75 der Arbeitseinheit 15 angeordnet. In der in Fig. 6 dargestellten unverschwenkten Grundstellung der Arbeitseinheit 15 sind die Fixierleisten 61A, 61B weiterhin parallel zu der Arbeitsebene 70 ausgerichtet.

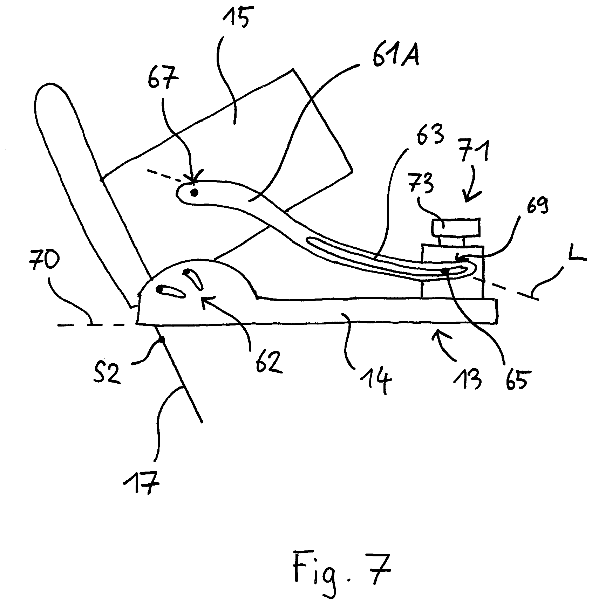

Zum Verschwenken der Arbeitseinheit 15 von der in Fig. 6 dargestellten Grundstellung in die in Fig. 7 dargestellte schräge Stellung wird zunächst die Spannvorrichtung 71 mittels der Betätigungseinrichtung 73, z.B. einer Flügelschraube, einer Taste oder einem Hebel, gelöst. Anschließend wird die Arbeitseinheit 15 gemäß Fig. 7 nach links geschwenkt, wobei die Kulissensteine 65 in den Führungskulissen 63 der Fixierleisten 61A, 61B entlanggleiten. Sobald die gewünschte Schrägstellung des Sägeblatts 17 erreicht ist, wird über die Betätigungseinrichtung 73 die Spannvorrichtung 71 wieder arretiert, wodurch das Sägeblatt 17 zuverlässig in der entsprechenden Schwenkstellung fixiert ist.

Dadurch dass die beiden Fixierleisten 61A, 61B im Wesentlichen parallel zu der Grundplatte 14 und auch vergleichsweise nahe an dieser angeordnet sind, ergibt sich in Verbindung mit der Beweglichkeit der Fixierleisten 61A, 61B ein besonders kompakter Aufbau der Handkreissäge, wobei ein sperriges feststehendes Schwenksegment, wie es aus dem Stand der Technik bekannt ist, vermieden wird.

Eine besonders hohe Stabilität ergibt sich, wenn die Befestigungspunkte 62, 65 und 67 ein Dreieck bilden, wie dies insbesondere in Fig. 7 gut erkennbar ist.

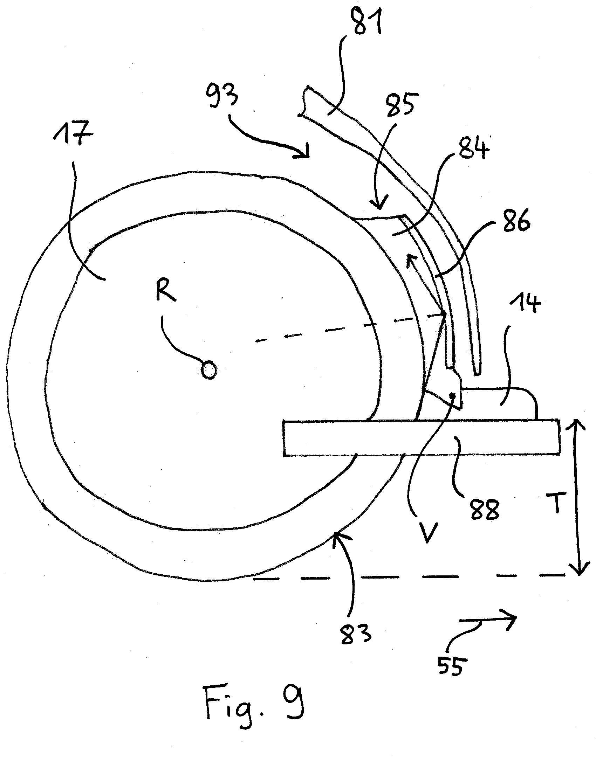

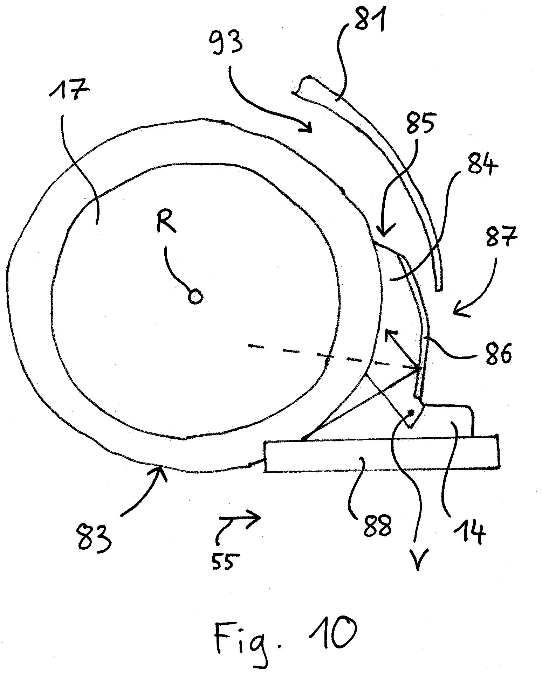

Gemäß einer in den Fig. 9-11 dargestellten weiteren Ausführungsform der Erfindung umfasst eine als Pendelhaubensäge ausgebildete Handkreissäge ein um eine Drehachse R rotierend angetriebenes Sägeblatt 17, welches oberhalb der Grundplatte 14 der Pendelhaubensäge durch eine Schutzhaube 81 abgedeckt ist. Wie bei der in den Fig. 1 und 2 dargestellten Ausführungsform ist bei der Pendelhaubensäge gemäß den Fig. 9 und 10 die Bearbeitungstiefe T verstellbar. Zum Verstellen der Bearbeitungstiefe T wird die hier nicht dargestellte Arbeitseinheit einschließlich des Sägeblatts 17 gegenüber der Grundplatte 14 bewegt, d.h. verschwenkt oder verschoben.

Um ein Anschlagen der Schutzhaube 81 an der Grundplatte 14 bei einem Abwärtsbewegen der Arbeitseinheit 15 zu vermeiden, ist diese derart gestaltet, dass bei nach oben bewegter Schutzhaube 81 eine Öffnung 87 zwischen der Grundplatte 14 und der Schutzhaube 81 besteht. Diese Öffnung 87 wird durch eine Leitplatte 85 abgedeckt, welche einen plattenartigen und parallel zu der Sägeblattebene verlaufenden Hauptabschnitt 84 sowie eine von diesem abstehende, gekrümmte Reflexionswand 86 umfasst.

Während des Sägebetriebs werden Späne von der Oberfläche des bearbeiteten Werkstücks 88 weggeschleudert und prallen gegen die Reflexionswand 86, wie in Fig. 9 und 10 durch Pfeile dargestellt ist. Durch den Aufprall der Späne auf die Reflexionswand 86 wird die Flugbahn der Späne im Sinne einer Reflexion geändert und weist fortan schräg nach oben. Wie aus den Figuren hervorgeht, ist die Leitplatte 85 um eine parallel zu der Drehachse R des Sägeblatts 17 verlaufende Verstellachse V verschwenkbar. Diese Verstellachse V befindet sich in einem unteren Bereich der Leitplatte 85 und im Bereich der Oberseite der Grundplatte 14.

In der in Fig. 9 dargestellten Arbeitsstellung der Handkreissäge ist die eingestellte Bearbeitungstiefe T relativ groß. Aufgrund der Drehung des Sägeblatts 17 fliegen die Späne von der Oberfläche des Werkstücks 88 ausgehend auf einer tangential zum Umfang 83 des Sägeblatts 17 verlaufenden Gerade von diesem weg. Nach dem Aufprall an der Reflexionswand 86 bewegen sich die Späne schräg nach oben weiter und verbleiben dabei in einen Freiraum 93 zwischen dem Umfang 83 des Sägeblatts 17 und der Schutzhaube 81. Dies ist hinsichtlich eines Abtransports der Späne günstig. Insbesondere kann so eine optimale, an sich bekannte Absaugung der Späne aus der Schutzhaube 81 heraus erfolgen.

Wenn jedoch die Bearbeitungstiefe T wie in Fig. 10 verringert ist, ändert sich die Stellung der Tangente und die Flugbahn der Späne verläuft flacher. Somit verringert sich der Reflexionswinkel und die Flugbahn der Späne weist nach dem Aufprall an der Reflexionswand 86 nicht mehr exakt in Richtung des Freiraums 93, sondern eher in Richtung des Sägeblatts 17.

Diesem hinsichtlich der Späneabfuhr unerwünschten Umstand wird dadurch entgegengewirkt, dass die Kippstellung der Leitplatte 85 und somit der Reflexionswand 86 bei einer Verringerung der Bearbeitungstiefe T geändert wird. Konkret wird die Leitplatte 85 einschließlich der Reflexionswand 86 um die Verstellachse V von dem Sägeblatt 17 weg, also im Bild nach rechts, geschwenkt, um so den Reflexionswinkel wieder etwas zu vergrößern. Die Leitplatte 85 mit der Reflexionswand 86 erfüllt insofern eine Doppelfunktion, als sie einerseits eine Umlenkung der von dem Werkstück 88 weggeschleuderten Späne in eine für den Spänetransport günstige Richtung bewirkt und andererseits die Öffnung 87 zwischen der Grundplatte 14 und der Schutzhaube 81 zuverlässig abdeckt.

Bei einem Erhöhen der Bearbeitungstiefe T bzw. beim Absenken der Arbeitseinheit einschließlich der Schutzhaube 81 schieben sich die Schutzhaube 81 und die Leitplatte 85 teleskopartig ineinander, sodass sie sich nicht gegenseitig behindern.

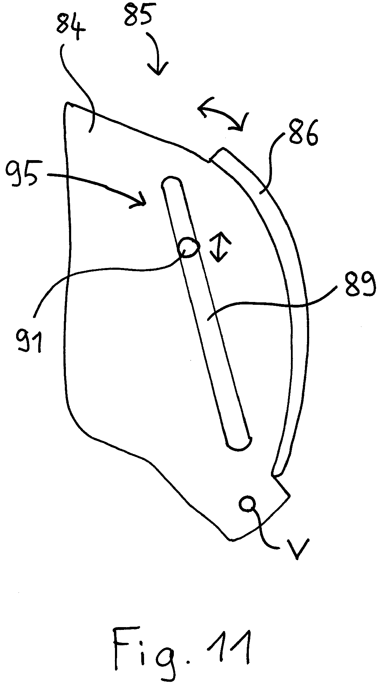

Um auf einfache Weise ein automatisches Verschwenken der Leitplatte 85 bei einem Verstellen der Bearbeitungstiefe T zu gewährleisten, ist die Leitplatte 85 durch die Schutzhaube 81 über eine in Fig. 11 gezeigte Gleitführung 95 gesteuert, welche eine hier geradlinige Steuerkurve definiert. Zur Definition der Steuerkurve umfasst die Gleitführung 95 ein in der Leitplatte 85 oder in einem mit dieser verbundenen Bauteil vorgesehenes Langloch 89 und einen in dem Langloch 89 geführten Nocken 91, welcher mit der Arbeitseinheit und dem Sägeblatt 17 verbunden ist.

Eine lineare Höhenverstellung der Arbeitseinheit bewirkt über eine entsprechende Linearbewegung des Nockens 91 in dem Langloch 89 ein Verschwenken der Leitplatte 85 um die Verstellachse V, wie in Fig. 11 durch Doppelpfeile dargestellt ist.

Bei jeder der vorstehend offenbarten Bearbeitungsmaschinen handelt es sich bevorzugt um eine elektrische Handkreissäge, die als Pendelhaubensäge ausgebildet ist.

### Bezugszeichenliste

- 13: Grundkörper
- 14: Grundplatte
- 15: Arbeitseinheit
- 17: Sägeblatt
- 19: Unterseite
- 21: Handhabe
- 23: Feststelleinrichtung
- 24: Hinweispfeil
- 25: Schwenkhebel
- 26: erster Hebelarm
- 27: zweiter Hebelarm
- 28: Lager
- 29: Tiefenmarkierung
- 30: Skala
- 31: Klemmkörper
- 33: Klemmfläche
- 35: Betätigungselement
- 39: Griffabschnitt
- 40: Stirnseite
- 51: Anrisszeiger
- 53: Anrissmarkierungsabschnitt
- 55: Sägerichtung
- 61A, 61B: Fixierleiste
- 62: Schwenklager
- 63: Führungskulisse
- 65: Kulissenstein
- 67: erster Fixierabschnitt
- 69: zweiter Fixierabschnitt
- 70, 70': Arbeitsebene
- 71: Spannvorrichtung
- 73: Betätigungseinrichtung
- 75: Motorgehäuse
- 81: Schutzhaube
- 83: Umfang
- 84: Hauptabschnitt
- 85: Leitplatte
- 86: Reflexionswand
- 87: Öffnung
- 88: Werkstück
- 89: Langloch
- 91: Nocken
- 93: Freiraum
- 95: Gleitführung
- 101: Säule
- 103: Klemmkörper
- 105: Funktionsfläche
- 106: Oberfläche der Säule
- 107: Feder
- 109: unterer Abschnitt der Funktionsfläche
- R: Rotationsachse
- T: Bearbeitungstiefe
- S1: Schwenkachse des Betätigungselements
- S2: Schwenkachse des Sägeblatts
- S3: Schwenkachse des Klemmkörpers
- W: Schwenkwinkel
- V: Verstellachse
- F1: durch einen Benutzer ausgeübte Kraft

## Patentansprüche

1. Bearbeitungsmaschine, insbesondere elektrische Handkreissäge, bevorzugt Pendelhaubensäge, mit einem, insbesondere eine Grundplatte (14) umfassenden, Grundkörper (13) und einer Arbeitseinheit (15), die ein angetriebenes Bearbeitungswerkzeug (17), insbesondere ein Sägeblatt, umfasst, wobei zum Einstellen der Bearbeitungstiefe (T) die Arbeitseinheit (15) oder ein Anschlag für die Arbeitseinheit (15) relativ zum Grundkörper (13) bewegbar ist und zum wahlweisen Feststellen einer eingestellten Bearbeitungstiefe (T) des Bearbeitungswerkzeugs (17) relativ zum Grundkörper (13) eine Spannvorrichtung zum Verspannen der Arbeitseinheit (15) oder des Anschlags mit dem Grundkörper (13) vorgesehen ist, wobei die Spannvorrichtung einen beweglichen, insbesondere verschwenkbaren, Klemmkörper (103) umfasst, der in einer Arretierstellung der Spannvorrichtung auf eine Gegenfläche (106) drückt,
**dadurch gekennzeichnet,**
**dass** der Klemmkörper (103) gemeinsam mit der Gegenfläche (106) zumindest in einer Verstellrichtung ein selbsthemmendes Gesperre bildet.

2. Bearbeitungsmaschine nach Anspruch 1,
**dadurch gekennzeichnet,**
**dass** eine Funktionsfläche (105) des Klemmkörpers (103) in der Arretierstellung einen spitzen Winkel zu der Gegenfläche (106) aufweist.

## Claims

1. A machining unit, in particular a hand-held electric circular saw, preferably a pendulum guard saw, having a base body (13) which in particular comprises a base plate (14); and having a work unit (15) which comprises a driven machining tool (17), in particular a saw blade, wherein the work unit (15) or an abutment for the work unit (15) is movable relative to the base body (13) to set the machining depth (T) and a clamping apparatus for clamping the work unit (15) or the abutment to the base body (13) is provided for a selective fixing of a set machining depth (T) of the machining tool (17) relative to the base body (13), with the clamping apparatus comprising a movable clamp body (103) which is in particular pivotable and which presses onto a counter-surface (106) in a fixed position of the clamping apparatus,
**characterized in that**
the clamp body (103) forms a self-locking ratchet together with the counter-surface (106) at least in an adjustment direction.

2. A machining unit in accordance with claim 1,
**characterized in that**
a functional surface (105) of the clamp body (103) has an acute angle with respect to the counter-surface (106) in the fixed position.

## Revendications

1. Machine d'usinage, en particulier scie circulaire portative électrique, de préférence scie pendulaire à cloche, comprenant un corps de base (13) qui inclut en particulier une plaque de base (14), et une unité de travail (15) qui inclut un outil d'usinage entraîné (17), en particulier une lame de scie, dans laquelle
en vue de régler la profondeur d'usinage (T), l'unité de travail (15) ou une butée pour l'unité de travail (15) est mobile par rapport au corps de base (13), et en vue de fixer sélectivement une profondeur d'usinage réglée (T) de l'outil d'usinage (17) par rapport au corps de base (13), il est prévu un dispositif de serrage pour serrer l'unité de travail (15) ou la butée avec le corps de base (13), le dispositif de serrage comprenant un corps de coincement (103) mobile, en particulier mobile en pivotement, qui pousse sur une contre-surface (106), dans une position d'arrêt du dispositif de serrage,
**caractérisée en ce que**
le corps de coincement (103) constitue un moyen d'arrêt autobloquant, conjointement avec la contre-surface (106), au moins dans une direction de déplacement.

2. Machine d'usinage selon la revendication 1,
**caractérisée en ce que**
une surface fonctionnelle (105) du corps de coincement (103) présente un angle aigu par rapport à la contre-surface (106), dans la position d'arrêt.
